# FASCICULE DE BREVET EUROPEEN

(11) **EP 4 469 700 B1**
(45) Date de publication et mention de la délivrance du brevet: **02.09.2026**
(21) Numéro de dépôt: 23701549.0
(22) Date de dépôt: 25.01.2023
(51) Int. Cl.: F16H 57/04

(54) **DEFLECTEUR D' HUILE COMPRENANT UN MOYEN DE CAPTATION DE PARTICULES MÉTALLIQUES**
ÖLDEFLEKTOR MIT MITTEL ZUM EINFANGEN VON METALLPARTIKELN
OIL DEFLECTOR COMPRISING A MEANS FOR CAPTURING METAL PARTICLES

(30) Priorité: 25.01.2022 FR 2200625
(43) Date de publication de la demande: 04.12.2024
(73) Titulaire: Horse Powertrain Solutions, S.L.U., 28108 Alcobendas (Madrid) (ES)
(72) Inventeur: DUARTE, Frédéric, 78084 Guyancourt (FR); GAILLIARD, Fabien, 78084 Guyancourt (FR); HERNANDEZ, Benoit, 78084 Guyancourt (FR); MIRGALET, Laurent, 78084 GUYANCOURT (FR); FERREIRA, Rémi, 78084 Guyancourt (FR); GIRARDOT, Vincent, 78084 Guyancourt (FR); VINCENT, Franck, 78084 Guyancourt (FR)
(74) Mandataire: Elzaburu S.L.P.
(86) Numéro de dépôt international: PCT/EP2023/051841
(87) Numéro de publication internationale: WO 2023/144233

(56) Documents cités:
- EP-A1- 3 037 693
- US-A1- 2018 163 843
- US-B2- 10 605 331

## Description

### Domaine technique de l'invention

L'invention concerne un agencement comprenant un déflecteur d'huile. L'invention porte encore sur une boîte de vitesses comprenant un tel agencement. L'invention porte encore sur un groupe motopropulseur comprenant une telle boîte de vitesses ou un tel agencement. L'invention porte encore sur un véhicule comprenant un tel groupe motopropulseur ou une telle boîte de vitesses ou un tel agencement.

### Etat de la technique antérieure

Un véhicule, en particulier un véhicule automobile, comprend généralement une boîte de vitesses. Une telle boîte de vitesses comprend des roues dentées et stocke de l'huile de lubrification permettant notamment la lubrification des dentures des roues dentées. Une telle lubrification au sein d'une boîte de vitesses est généralement assurée par projection et récupération gravitaire du lubrifiant. Généralement l'une des roues dentées est une couronne de différentiel. Une telle couronne de différentiel baigne généralement dans l'huile dans une partie basse de la boîte de vitesses ce qui permet de remonter l'huile de bas en haut et de la projeter, en particulier pour redistribuer l'huile dans plusieurs zones simultanément.

Afin que cette couronne de différentiel remplisse son rôle, sensiblement à la manière d'une pompe, des parois en vis-à-vis de sa denture doivent être proches. Or, il n'est pas toujours possible d'agencer des parois à proximité de la denture d'une couronne de différentiel, en particulier du fait de contraintes en termes de fabrication et/ou de conception et/ou de fonctions adjacentes de la boîte de vitesses.

Il est connu, par le document EP3037693, divulguant un dispositif de transmission de puissance comprenant une plaque de réservoir destinée à diviser l'intérieur d'un carter de transmission en une chambre de différentiel et une chambre de stockage d'huile hydraulique. Cette plaque comprend une partie cylindrique recouvrant une partie d'un engrenage différentiel, une partie en bride s'étendant radialement à partir de la partie cylindrique, et une partie d'enveloppement s'étendant depuis le bord périphérique externe de la bride de manière à recouvrir partiellement une couronne de différentiel sans interférer avec un pignon d'attaque. Les différentes parties sont formées d'une seule pièce, et un élément d'étanchéité est interposé entre le carter et le bord périphérique externe de la bride, au moins dans la zone située sous la partie d'enveloppement de la couronne dentée.

Il est également connu, par le document US2018163843, divulguant un dispositif de transmission de puissance comprenant une cloison en résine divisant l'intérieur d'un carter en une chambre de différentiel et une chambre de réserve d'huile de travail. Cette cloison comprend une plaque magnétique fixée dans sa partie inférieure sur la surface orientée vers la chambre de réserve d'huile, et un aimant fixé par attraction magnétique sur ladite plaque.

Il est en outre connu, par le document US10605331, divulguant un système de contrôle du niveau de lubrifiant d'un dispositif mécanique comportant un carter mécanique comprenant une cavité de puisard et un dispositif directeur de lubrifiant disposé au fond du carter. Un ensemble d'engrenages est logé dans la cavité de puisard, et un réservoir de lubrifiant est situé dans le dispositif directeur. Ce réservoir contient soit un moteur associé à une pompe, soit une vessie d'air expansible gonflable par une source d'air. Dans le cas du réservoir équipé d'une pompe, celle-ci contrôle la circulation du lubrifiant dans la cavité de puisard, tandis que dans le cas d'une vessie d'air, la source d'air régule le niveau de lubrifiant à l'intérieur de cette cavité.

### Présentation de l'invention

Le but de l'invention est de fournir un agencement remédiant aux inconvénients ci-dessus. En outre l'invention permet de dépolluer l'huile préalablement à sa remontée par le biais d'une telle couronne de différentiel.

Pour atteindre cet objectif, l'invention porte sur un agencement comprenant :
- un carter, notamment un carter d'une boîte de vitesses, comprenant une paroi,
- une couronne dentée comprenant une denture, notamment une couronne dentée de différentiel, baignant partiellement dans de l'huile,
- un espace ménagé entre la paroi et la couronne dentée,
l'agencement comprenant :
- un moyen de captation de matière métallique, notamment un aimant, notamment en forme de pastille cylindrique,
- un déflecteur d'huile remplissant au moins partiellement l'espace entre la paroi du carter et la couronne dentée, le déflecteur d'huile comprenant une partie inférieure destinée à baigner dans l'huile au niveau de la denture de la couronne dentée, la partie inférieure comprenant un moyen de réception du moyen de captation de matière métallique.

Le moyen de réception du moyen de captation est en forme de grille de sorte à maximiser l'aire de contact entre l'huile et le moyen de captation. Au moins un jeu peut exister entre le moyen de réception et le moyen de captation de sorte à laisser au moins un degré de liberté au moyen de captation logé au sein du moyen de réception.

La partie inférieure du déflecteur d'huile peut comprendre un moyen de maintien du moyen de captation au sein du moyen de réception, notamment une languette flexible et élastique.

Le déflecteur d'huile peut comprendre une partie supérieure destinée à orienter la projection d'huile.

Le déflecteur d'huile peut avoir une forme générale courbée s'étendant entre la partie inférieure et la partie supérieure, notamment une forme générale présentant une courbure de rayon sensiblement égal au rayon de la denture de la couronne dentée.

Le déflecteur d'huile peut être en matière plastique et/ou en composite.

Le déflecteur d'huile peut avantageusement comprendre sur sa partie supérieure un canal vertical destiné à s'étendre en aplomb d'un élément à lubrifier, avantageusement dans un mode de réalisation selon lequel la roue dentée est une couronne de différentiel, le canal vertical s'étend en aplomb du boitier du différentiel. Selon un autre mode de réalisation, le canal vertical est agencé de sorte à permettre l'huile de s'écouler vers un élément à lubrifier, pouvant par exemple être un pignon, un crabot, ou tout autre élément nécessitant d'être lubrifié.

Le déflecteur d'huile peut comprendre une paroi principale s'étendant majoritairement dans un premier plan parallèle au flanc de la couronne. La casquette ou bavette peut s'étendre de la paroi principale en regard de la denture de la roue dentée, avantageusement la casquette ou bavette s'étend dans un plan sécant, avantageusement un plan orthogonale, au premier plan. Le canal vertical peut s'étendre en sailli de la paroi principale dans un sens opposé à la casquette. Avantageusement, le canal vertical est en forme de gouttière présentant un fond s'étendant principalement dans un plan sécant à la foi au premier plan et au plan principal d'extension de la casquette.

Avantageusement, l'agencement peut comprendre une paroi de renvoi faisant sailli en vis-à-vis du canal. Cette paroi pouvant être un élément rapporté sur le carter et notamment fixé sur celui-ci par exemple par un taraudage, ou bien venant de matière avec le carter. La paroi de renvoi pouvant également être formé par un arbre ou pignon présent dans le carter et étant disposé à la foi en vis-à-vis de la roue dentée et du canal vertical.

Ainsi l'huile projetée (ou entrainée) par la roue dentée est projetée contre ladite paroi de renvoi permettant elle-même de renvoyer l'huile vers le canal vertical, l'huile s'écoule ainsi le long dudit canal vertical de sorte à alimenter en huile le boitier de différentiel permettant la lubrification du système d'engrenage compris dans ledit boitier de différentiel (ou tout autre élément se situant sur le même axe que la roue dentée).

Ainsi, le déflecteur d'huile permet de canaliser le parcours d'huile permettant d'optimiser celui-ci.

L'invention porte encore sur une boîte de vitesses comprenant un agencement tel que défini précédemment.

L'invention porte encore sur un groupe motopropulseur, notamment de véhicule, comprenant une boîte de vitesses telle que définie précédemment, ou un agencement tel que défini précédemment.

L'invention porte encore sur un véhicule, notamment un véhicule automobile, comprenant un groupe motopropulseur tel que défini précédemment, ou une boîte de vitesses telle que définie précédemment, ou un agencement tel que défini précédemment.

### Présentation des figures

Ces objets, caractéristiques et avantages de la présente invention seront exposés en détail dans la description suivante d'un mode de réalisation faite à titre non-limitatif en relation avec les figures jointes parmi lesquelles :
[Fig. 1] La figure 1 est une vue schématique d'un véhicule selon un mode de réalisation.
[Fig. 2] La figure 2 est une vue en perspective d'un agencement selon un mode de réalisation.
[Fig. 3] La figure 3 est une autre vue partielle en perspective de l'agencement selon le mode de réalisation.
[Fig. 4] La figure 4 est une vue en perspective d'un carter, d'un déflecteur d'huile et d'un moyen de captation selon le mode de réalisation.
[Fig. 5] La figure 5 est une vue en perspective éclatée partielle du déflecteur d'huile et du moyen de captation selon le mode de réalisation.
[Fig. 6] La figure 6 est une vue de face partielle du déflecteur d'huile et du moyen de captation selon le mode de réalisation.
[Fig. 7] La figure 7 est une vue en coupe selon un plan B-B du déflecteur d'huile et du moyen de captation selon le mode de réalisation.
[Fig. 8] La figure 8 est une vue en coupe selon un plan C-C du déflecteur d'huile et du moyen de captation selon le mode de réalisation.
[Fig. 9] La figure 9 est une vue en perspective du déflecteur d'huile et du moyen de captation intégré dans le déflecteur d'huile selon le mode de réalisation.

### Description détaillée

La direction selon laquelle un véhicule automobile se déplace en ligne droite est définie comme étant la direction longitudinale X. Par convention, la direction perpendiculaire à la direction longitudinale, située dans un plan parallèle au sol, est nommée direction transversale Y. La troisième direction, perpendiculaire aux deux autres, est nommée direction verticale Z. Ainsi, on utilise un repère direct XYZ dans lequel X est la direction longitudinale dans le sens avant-arrière du véhicule, donc dirigée vers l'arrière, Y est la direction transversale dirigée vers la droite et Z est la direction verticale dirigée vers le haut. Le sens avant correspond au sens dans lequel le véhicule automobile se déplace habituellement dans la direction longitudinale et est opposé au sens arrière.

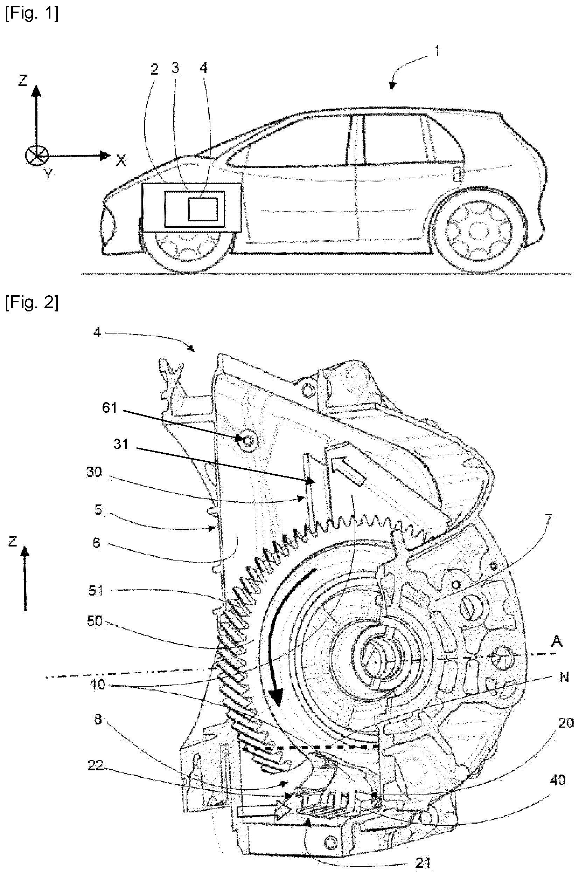

La figure 1 illustre schématiquement un véhicule 1, par exemple un véhicule automobile, selon un mode de réalisation.

Le véhicule comprend un groupe motopropulseur 2. Le groupe motopropulseur 2 comprend par exemple au moins un moteur thermique et/ou au moins un moteur électrique. Le véhicule ou le groupe motopropulseur comprend une boîte de vitesses 3. Le véhicule, ou le groupe motopropulseur, ou la boîte de vitesse comprend un agencement 4 illustré notamment sur la figure 2.

L'agencement 4 comprend un carter 5. Par exemple, le carter 5 est un carter de la boîte de vitesses 3. Le carter 5 comprend au moins une paroi 6.

L'agencement 4 comprend encore une roue dentée 50. La roue dentée comprend une denture 51. Par exemple, la roue dentée est une couronne dentée 50 de différentiel. De préférence, la couronne dentée 50 est en liaison pivot d'axe A par rapport au carter 5. Avantageusement, l'axe A s'étend dans un plan longitudinal et transversal ou sensiblement dans un plan longitudinal et transversal.

L'agencement 4 comprend encore un espace 8 ménagé entre la paroi 6 et la couronne dentée 50.

L'agencement 4 comprend encore un moyen de captation 40 de matière métallique, ou matériaux métalliques, ou particules métalliques. De préférence, le moyen de captation est, ou comprend, un aimant, ou un élément aimanté, ou un élément magnétique. Par exemple, comme illustré, le moyen de captation 40 a une forme de pastille cylindrique. Alternativement, le moyen de captation est parallélépipédique, ou sensiblement parallélépipédique, ou encore sphéroïdale ou sensiblement sphéroïdale. D'autres formes peuvent également être envisagées pour le moyen de captation 40.

L'agencement 4 comprend encore un déflecteur d'huile 10 remplissant au moins partiellement l'espace 8 entre la paroi 6 du carter 5 et la couronne dentée 50. Le déflecteur d'huile 10 comprend une partie inférieure 20. La roue dentée 50 baigne partiellement dans de l'huile, un niveau N d'huile étant illustré par une ligne en pointillés sur la figure 2. A noter que sur cette figure 2, la roue dentée 50 est partiellement représentée de sorte à rendre visible la partie inférieure 20 du déflecteur d'huile 10. Ainsi, la couronne dentée 50 baigne dans l'huile au niveau de la denture 51 de la couronne dentée 50.

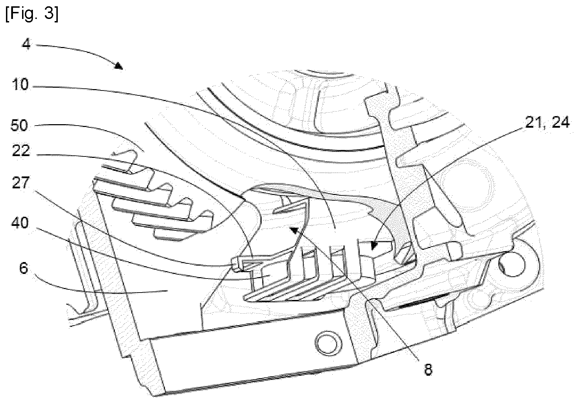

Le déflecteur d'huile, en particulier sa partie inférieure 20, comprend un moyen de réception 21 du moyen de captation 40, comme illustré sur les figures 2 à 9.

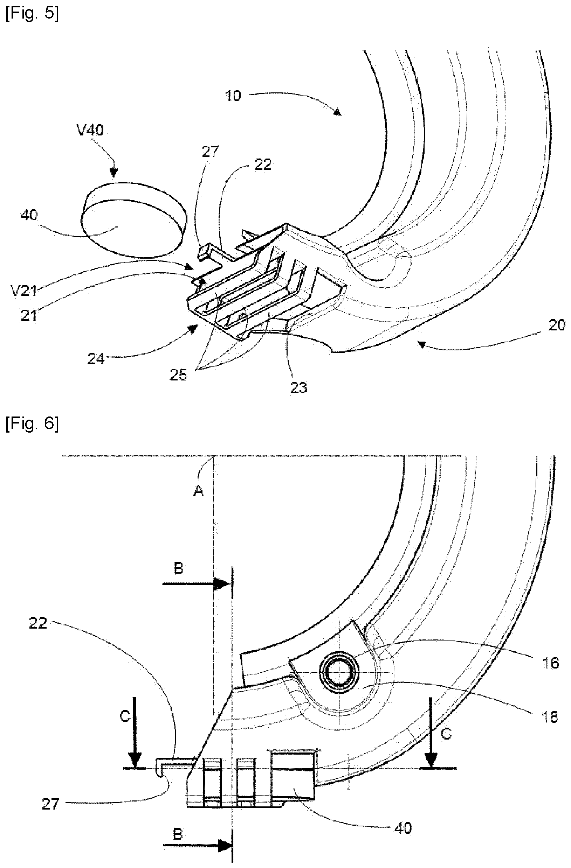

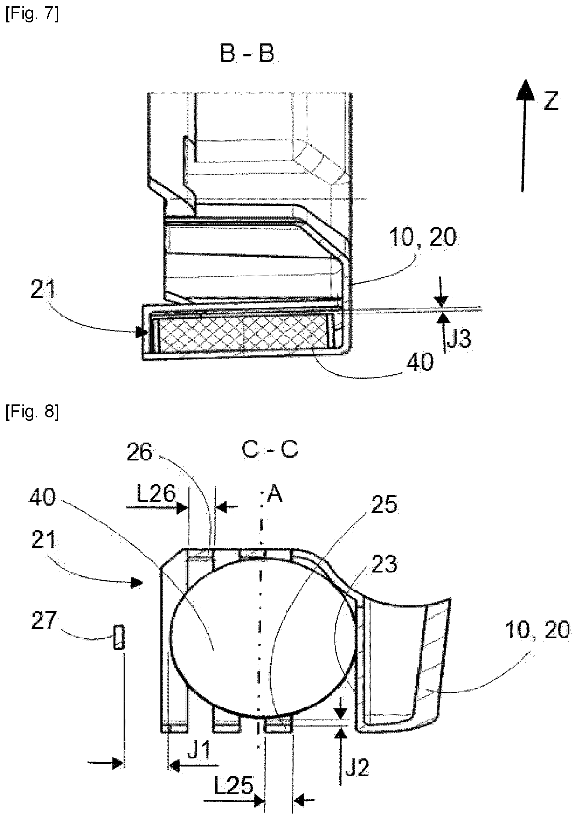

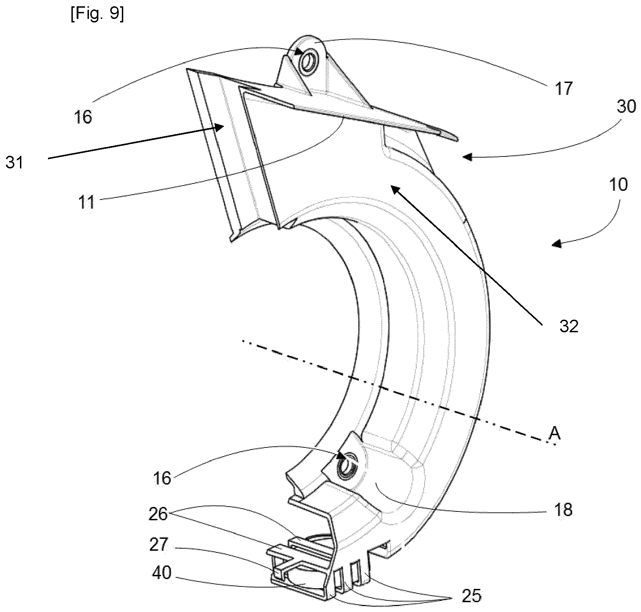

Selon l'invention, le moyen de réception 21 du moyen de captation 40 est en forme de grille 24 de sorte à maximiser l'aire de contact entre l'huile et le moyen de captation 40. Le moyen de réception 21 de type grille 24 comprend par exemple des barreaux inférieurs 25 comme illustré sur la figure 5. Bien que trois barreaux inférieurs 25 soient illustrés, alternativement, un seul ou deux barreaux inférieurs ou plus de trois barreaux inférieurs, en particulier de largeur L25 adaptée (figure 8), peuvent convenir. Comme illustrés sur la figure 9, le moyen de réception 21 comprend par exemple deux barreaux supérieurs 26. Alternativement, un seul barreau supérieur ou plus de deux barreaux supérieurs 26 peuvent convenir également, notamment en adaptant la largeur L26 de tels barreaux supérieurs 26 (figure 8).

Bien que les barreaux supérieurs 26 et inférieurs 25 soient agencés sensiblement parallèlement à l'axe de rotation A de la couronne dentée 50, les barreaux supérieurs et/ou les barreaux inférieurs peuvent être agencés perpendiculairement à l'axe de rotation A, ou encore être orientés différemment.

De préférence, les barreaux supérieurs et/ou les barreaux inférieurs se prolongent verticalement de sorte à créer un moyen de réception de forme parallélépipédique ou sensiblement parallélépipédique.

Alternativement, la grille comprend des barreaux supérieurs se croisant et/ou se chevauchant, par exemple perpendiculairement, et/ou la grille comprend des barreaux inférieurs se croisant et/ou se chevauchant, par exemple perpendiculairement.

Alternativement, selon un mode de réalisation non illustré, une pièce supplémentaire vient coopérer avec le déflecteur d'huile pour bloquer le moyen de captation au sein du moyen de réception. Par exemple, une telle pièce supplémentaire vient se cliper ou se clipser sur le déflecteur d'huile. Alternativement, ou en complément, des ergots, par exemple au nombre de quatre, maintiennent le moyen de captation au niveau de la partie inférieure 20 du déflecteur d'huile. Alternativement, ou en complément, le moyen de captation est conformé pour coopérer avec des saillies ou orifices ménagés dans le déflecteur d'huile pour assurer un stockage du moyen de captation, de préférence avec des degrés de libertés.

Comme illustré sur la figure 5, le moyen de réception 21 du moyen de captation 40 de matière métallique offre un volume V21. Le moyen de captation 40 a un volume V40. Avantageusement, le volume V21 du moyen de réception est supérieur, voire largement supérieur, au volume V40 du moyen de captation 40. Quoi qu'il en soit, l'espace ou logement de réception 21 pour le moyen de captation 40 empêche le moyen de captation de s'échapper, de sortir, de son logement 21 afin que le moyen de captation ne se retrouve pas libre dans la boîte de vitesses.

Pour ce faire, par exemple, la partie inférieure 20 du déflecteur d'huile 10 comprend un moyen de maintien 22 du moyen de captation 40 au sein du moyen de réception 21. De préférence, un tel moyen de maintien est une languette 22. Avantageusement, cette languette est flexible de sorte à pouvoir la courber pour l'insertion du moyen de captation. De préférence, la languette est élastique de sorte qu'une fois le moyen de captation placé dans son logement 21, la languette revient en position initiale comme il sera expliqué plus loin.

Comme illustré notamment sur la figure 9, le déflecteur d'huile 10 comprend avantageusement une partie supérieure 30. De préférence, une telle partie supérieur 30 comprend une casquette ou bavette 11.

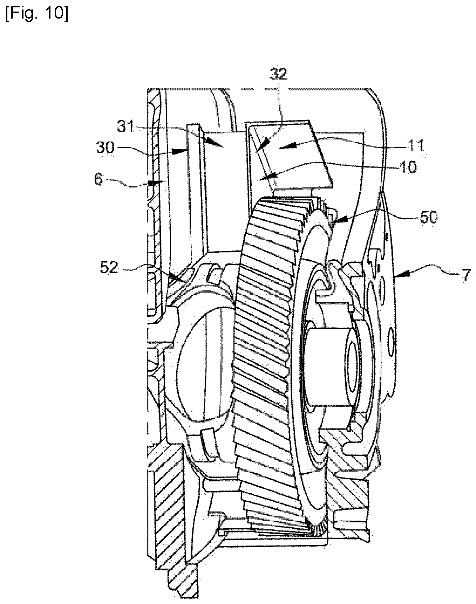

En outre, et comme illustré notamment sur les figures 9 et 10, le déflecteur d'huile avantageusement sur sa partie supérieure 30 comprend un canal vertical 31 destiné à s'étendre en aplomb d'un boitier de différentiel 52 (dans un mode de réalisation selon lequel la roue dentée 50 est une couronne d'un différentiel, l'invention s'applique également à autre mode de réalisation dans lequel le canal vertical est agencé de sorte à permettre l'huile de s'écouler vers un élément à lubrifier, pouvant par exemple être un pignon, un crabot, ou tout autre élément nécessitant d'être lubrifié.

Comme il est particulièrement visible sur la figure 10, le déflecteur d'huile comprend une paroi principale 32 s'étendant majoritairement dans un premier plan parallèle au flanc de la couronne. La casquette ou bavette 11 s'étend de la paroi principale 32 en regard de la denture 51 de la couronne 50, avantageusement la casquette ou bavette 11 s'étend dans un plan sécant, avantageusement un plan orthogonale, au premier plan. Le canal vertical 31 s'étend en sailli de la paroi principale 32 dans un sens opposé à la casquette 11. Avantageusement, le canal vertical 31 est en forme de gouttière présentant un fond s'étendant principalement dans un plan sécant à la foi au premier plan et au plan principal d'extension de la casquette 11.

Avantageusement, l'agencement peut comprendre une paroi de renvoi (non représentée ici) faisant sailli en vis-à-vis du canal. Cette paroi pouvant être un élément rapporté sur le carter et notamment fixé sur celui-ci par exemple par un taraudage 31, ou bien venant de matière avec le carter. La paroi de renvoi pouvant également être formé par un arbre ou pignon présent dans le carter et étant disposé en vis-à-vis de la couronne et du canal vertical 31.

Ainsi l'huile projetée (ou entrainée) par la couronne 50 est projetée contre ladite paroi de renvoi permettant elle-même de renvoyer l'huile vers le canal vertical 31, l'huile s'écoule ainsi le long dudit canal vertical 31 de sorte à alimenter en huile le boitier de différentiel 52 permettant la lubrification du système d'engrenage compris dans ledit boitier de différentiel.

Ainsi, le déflecteur d'huile 10 permet de canaliser le parcours d'huile permettant d'optimiser celui-ci.

Par exemple, le déflecteur d'huile 10 a une forme générale courbée. Par « courbée », on entend une forme générale de haricot ou de banane, s'étendant entre la partie inférieure 20 et la partie supérieure 30. Par exemple, le déflecteur présente une courbure de rayon sensiblement égal au rayon de la denture 51 de la couronne dentée 50.

De préférence, le déflecteur d'huile 10 est en matière plastique et/ou en matériau composite. Par exemple le déflecteur d'huile est obtenu par moulage.

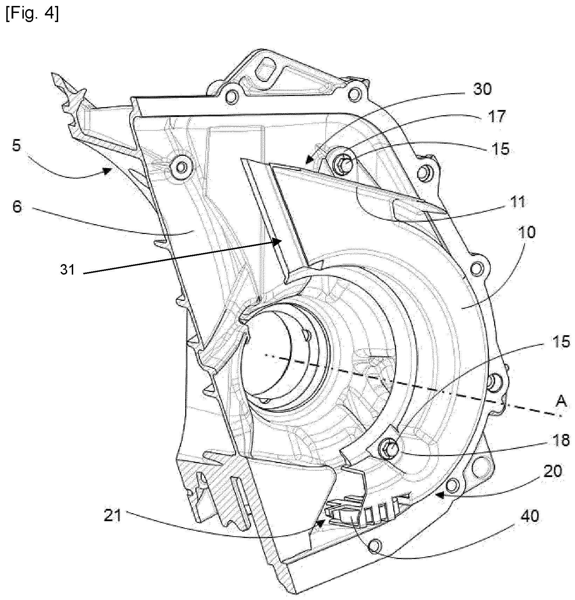

Avantageusement, comme illustré notamment sur les figures 4 et 9, le déflecteur d'huile comprend des moyens de fixation destinés à permettre la fixation du déflecteur d'huile sur le carter 5. De préférence, comme illustré sur les figures 2 et 4 en particulier, le déflecteur d'huile 10 est fixé contre ou sur la paroi 6 du carter 5. Par exemple, les moyens de fixation du déflecteur d'huile comprennent une oreille 17 dotée d'un alésage 16 ménagée au niveau de la partie supérieure 30. Par exemple, les moyens de fixation du déflecteur d'huile comprennent une échancrure ou entaille 18 dotée d'un alésage 16 ménagée au niveau de la partie inférieure 20. Comme illustré sur les figures 6 et 9, de préférence, deux inserts cylindriques sont par exemple emmanchés de force dans les alésages 16 ménagés dans le déflecteur d'huile 10. Alternativement, de tels inserts sont surmoulés avec le déflecteur d'huile. De tels inserts et/ou alésages permettent de fixer le déflecteur d'huile sur au moins une des parois de la boîte de vitesses, en l'occurrence la paroi 6 sur les figures. Par exemple, comme illustré sur la figure 4, des vis 15 traversent les inserts et/ou alésages du déflecteur d'huile et coopèrent avec des taraudages ou écrous au niveau de la paroi sur ou contre laquelle le déflecteur d'huile vient se fixer.

Alternativement, des goujons taraudés peuvent être prévues sur déflecteur d'huile de sorte à coopérer avec des écrous derrière la paroi contre laquelle le déflecteur vient se fixer. Alternativement encore, des goujons peuvent s'étendre depuis la paroi et venir coopérer dans des orifices ménagés dans le déflecteur, des écrous venant assurer le maintien en position du déflecteur d'huile. Alternativement, un ou plusieurs clipsages peuvent assurer le positionnement et le maintien en position du déflecteur d'huile par rapport à la paroi du carter.

En résumé, la solution porte sur un déflecteur d'huile 10 intégrant un élément de captation 40 de particules métalliques. Comme illustré notamment sur la figure 2, les formes du déflecteur 10 permettent de créer une paroi physique au plus proche de la couronne de différentiel 50, en particulier dans des zones où la paroi 6 est éloignée d'une seconde paroi 7 de la boîte de vitesses le cas échéant. Ainsi, les formes du déflecteur 10 entre la partie inférieure 20 et la partie supérieure 30 contribuent à une fonction de guidage du flux de lubrifiant, notamment de type huile. Ainsi, la rotation de la couronne de différentiel 40 (sens antihoraire sur la figure 2) autour de son axe A génère un effet de pompe permettant de capter le lubrifiant à proximité de la partie inférieure 20 et de le remonter jusqu'à la partie supérieure 30. Autrement dit, la couronne de différentiel 50 refoule l'huile depuis le bas de la boîte de vitesses, sous le niveau N du lubrifiant, par exemple à proximité d'un bouchon de vidange (non illustré) de la boîte de vitesses, jusqu'au niveau de la bavette 11. La bavette 11 permet ainsi de diriger, orienter le flux d'huile ainsi remonté, par exemple afin d'éviter des projections vers le haut de la boîte de vitesses 3 qui s'avèrent inutiles ou dans une zone précise où un besoin en lubrifiant existe.

Comme évoqué précédemment, le moyen de réception 21 ou logement ou réceptacle permet d'accueillir le moyen de captation 40 dans la partie inférieure 20 ou zone du déflecteur d'huile 10 correspondant au bas de la boîte de vitesses. Ainsi, l'élément de captation est situé en partie basse de la boîte de vitesses, dans la nappe de lubrifiant, de préférence sous le niveau N de la nappe d'huile représentée par un trait en pointillés sur la figure 2. Le fait que le moyen de réception 21 soit maintenu au sein du déflecteur d'huile 10 permet de positionner idéalement le moyen de captation 40 dans le flux d'aspiration de lubrifiant généré par la rotation de la couronne dentée 50 à proximité du déflecteur d'huile et de la deuxième paroi 7 notamment. Le lubrifiant est ainsi débarrassé de tout polluant, notamment de type limaille métallique, avant que ce lubrifiant ne soit projeté vers des éléments nécessitant une lubrification, par exemple des roulements et/ou paliers et/ou pignons.

Un tel positionnement du moyen de captation 40 en partie basse, dans la nappe d'huile de la boîte de vitesses, permet de capter les déchets métalliques également au repos, notamment hors fonctionnement de la boîte de vitesses. A noter que le retour d'huile autour de la couronne de différentiel 50 arrive à proximité du moyen de captation ce qui favorise là encore la captation. De plus, le moyen de captation est agencé dans la zone où le flux d'huile est maximum lorsque la couronne dentée tourne et aspire le lubrifiant.

En résumé, l'emplacement du moyen de captation est optimal pour maximiser la captation de la « pollution » métallique contenue dans le lubrifiant. Les particules métalliques sont ainsi retenues, collées, aimantées sur le moyen de captation ce qui évite des contacts entre ces particules et les dentures de pignons et/ou paliers et/ou roulements et les dégradations qui en découlent. Ainsi les particules métalliques sont stockées, accumulées dans une zone distante des éléments nécessitant du lubrifiant.

De plus, la solution permet de maximiser la surface de captation. En effet, comme vu précédemment, le moyen de réception 21 a une forme de grille, de sorte à obtenir une aire de contact importante entre l'huile et le moyen de captation 40. Comme vu précédemment, au moins un degré de liberté est possible pour le moyen de captation 40 logé au sein du moyen de réception 21. Autrement dit, le moyen de captation 40 est monté flottant, c'est-à-dire mobile dans son logement 21. Ainsi, par exemple, une translation voire plusieurs translations dans des directions différentes sont possibles pour le moyen de captation 40 au sein du logement 21. Eventuellement, un pivotement ou rotation ou portion de rotation, est possible pour le moyen de captation 40 au sein de son moyen de réception 21. Par exemple, en cas de moyen de captation en forme de pastille sensiblement cylindrique d'axe de révolution vertical et de moyen de réception délimitant un volume V21 sensiblement parallélépipédique, comme illustré sur les figures 5, 6, 8 et 9, le moyen de captation peut tourner, pivoter autour de son axe de révolution.

En outre, quel que soit la forme du moyen de captation, comme illustré sur la figure 8, un jeu J2 est prévu entre le moyen de captation 40 et son moyen de réception 21 suivant la direction de l'axe de rotation A de la couronne dentée 50. De plus, un jeu J3, illustré sur la figure 7, s'étend selon la direction verticale ou sensiblement verticale entre le moyen de captation 40 et le moyen de réception 21. Un autre jeu, J1, illustré sur la figure 8 entre la languette 22, notamment un rebord 27, et le moyen de captation, s'étend entre le moyen de captation 40 et le moyen de réception selon la direction perpendiculaire à la direction verticale et perpendiculaire à l'axe de rotation A de la couronne dentée 50.

En effet, de préférence, afin de pouvoir monter le moyen de captation 40 tout en respectant le besoin de jeu flottant dans le moyen de réception 21, la languette 22 est agencée au niveau d'une ouverture dans le moyen de réception 21 permettant l'insertion du moyen de captation. Comme évoqué précédemment, la languette 22 est flexible, élastique de sorte à accepter de se déformer pour permettre de glisser le moyen de captation dans son moyen de réception 21 et revenir ensuite à sa position initiale. Le moyen de maintien 22 de type languette est munie de l'ergot ou rebord 27 à son extrémité empêchant le moyen de captation de s'échapper du moyen de réception 21. En effet, le moyen de réception 21 comprend une butée 23, illustrée sur les figures 5 et 8, agencée en vis-à-vis du rebord 27 de sorte à stopper le moyen de captation dans la direction opposée. Ainsi, la languette 22 équipée de son rebord 27 empêche toute sortie intempestive du moyen de captation hors de son logement. Le moyen de captation étant dans la nappe d'huile, ces jeux J1, J2, J3 engendrent d'éventuels mouvements du moyen de captation du fait du flux d'huile créé par la couronne dentée en rotation, et ce, bien que le moyen de captation soit emprisonné dans son logement. Cela participe encore à augmenter la capacité de captation de particules métalliques.

En résumé, la solution offre un montage simple et fiable d'un moyen de captation de résidus métalliques au sein d'une boîte de vitesses. La solution s'avère compatible avec un moyen de captation standard, largement utilisé dans ce domaine, par exemple en forme de pastille cylindrique, ce qui la rend économique. En effet, la solution ne requiert pas obligatoirement de modification sur le moyen de captation. La solution rend possible l'insertion du moyen de captage en préparation en bord de chaîne de montage, avant assemblage de la boîte de vitesses. Malgré l'espace 8, éventuellement conséquent entre les deux parois 6, 7 en vis-à-vis, le déflecteur d'huile permet la remontée d'huile via une aspiration de l'huile depuis la nappe vers le haut. Ainsi, même en cas de fortes contraintes d'architecture de boîte de vitesses, la forme du déflecteur d'huile peut être adaptée pour offrir des parois de guidage utiles pour la remontée du lubrifiant. La solution permet d'assurer la fonction de remontée d'huile tout en maintenant le moyen de captation à un emplacement optimisant le captage des déchets métalliques. En outre, en cas de déflecteur d'huile fabriqué en matière plastique et/ou en matière composite et non en alliage d'aluminium ou en fonte par exemple, il est aisé d'obtenir des formes très complexes si besoin, en particulier concernant le moyen de réception du moyen de captation. Il est ainsi facile de maximiser la surface de captation, le moyen de captation étant encapsulé, piégé, stocké, dans son logement 21 avec de nombreux orifices permettant à l'huile de venir à son contact.

Grâce à la solution, la couronne de différentiel peut remonter l'huile, sensiblement à la manière d'une pompe, le déflecteur d'huile étant notamment en vis-à-vis de la denture de la couronne dentée, quelles que soient les contraintes en termes de fabrication et/ou de conception et/ou de fonctions adjacentes à la boîte de vitesses.

En remarque, la solution selon l'invention atteint donc l'objectif de permettre la remontée de l'huile tout en dépolluant cette huile au sein d'une boîte de vitesses et présente les avantages suivants :
- elle est économique,
- elle fait appel à des procédés de fabrication largement utilisés dans l'industrie automobile, notamment l'injection de matière plastique en cas de déflecteur d'huile en matière plastique,
- elle peut être utilisée dans d'autres mécanismes ayant au moins une roue dentée baignant dans l'huile.

## Revendications

1. Agencement (4) comprenant :
- un carter (5), notamment un carter (5) d'une boîte de vitesses (3), comprenant une paroi (6),
- une couronne dentée (50) comprenant une denture (51), notamment une couronne dentée (50) de différentiel, baignant partiellement dans de l'huile,
- un espace (8) ménagé entre la paroi (6) et la couronne dentée (50),
l'agencement (4) comprenant:
- un moyen de captation (40) de matière métallique, notamment un aimant, notamment en forme de pastille cylindrique,
- un déflecteur d'huile (10) remplissant au moins partiellement l'espace (8) entre la paroi (6) du carter (5) et la couronne dentée (50), le déflecteur d'huile (10) comprenant une partie inférieure (20) destinée à baigner dans l'huile au niveau de la denture (51) de la couronne dentée (50), la partie inférieure (20) comprenant un moyen de réception (21) du moyen de captation (40) de matière métallique,
**caractérisé en ce que**:
le moyen de réception (21) du moyen de captation (40) est en forme de grille (24) de sorte à maximiser l'aire de contact entre l'huile et le moyen de captation (40).

2. Agencement (4) selon l'une des revendications précédentes, **caractérisé en ce qu'**au moins un jeu (J1 ; J2 ; J3) existe entre le moyen de réception (21) et le moyen de captation (40) de sorte à laisser au moins un degré de liberté au moyen de captation (40) logé au sein du moyen de réception (21).

3. Agencement (4) selon l'une des revendications précédentes, **caractérisé en ce que** la partie inférieure (20) du déflecteur d'huile (10) comprend un moyen de maintien (22) du moyen de captation (40) au sein du moyen de réception (21), notamment une languette flexible et élastique.

4. Agencement (4) selon l'une des revendications précédentes, **caractérisé en ce que** le déflecteur d'huile (10) comprend une partie supérieure (30) destinée à orienter la projection d'huile.

5. Agencement (4) selon la revendication précédente, **caractérisé en ce que** le déflecteur d'huile (10) a une forme générale courbée s'étendant entre la partie inférieure (20) et la partie supérieure (30), notamment une forme générale présentant une courbure de rayon sensiblement égal au rayon de la denture (51) de la couronne dentée (50).

6. Agencement (4) selon l'une des revendications précédentes, **caractérisé en ce que** le déflecteur d'huile (10) est en matière plastique et/ou en composite.

7. Boîte de vitesses (3), **caractérisée en ce qu'**elle comprend un agencement (4) selon l'une des revendications précédentes.

8. Groupe motopropulseur (2), notamment de véhicule, **caractérisé en ce qu'**il comprend une boîte de vitesses (3) selon la revendication précédente, ou un agencement (4) selon l'une des revendications 1 à 6.

9. Véhicule, notamment véhicule automobile (1), **caractérisé en ce qu'**il comprend un groupe motopropulseur (2) selon la revendication précédente, ou une boîte de vitesses (3) selon la revendication 7, ou un agencement (4) selon l'une des revendications 1 à 6.

## Patentansprüche

1. Anordnung (4) umfassend:
- ein Gehäuse (5), insbesondere ein Gehäuse (5) eines Getriebes (3), mit einer Wand (6),
- einen Zahnkranz (50) mit einer Verzahnung (51), insbesondere einem Differentialzahnkranz (50), der teilweise in Öl getaucht ist,
- einen Raum (8) zwischen der Wand (6) und dem Zahnkranz (50),
wobei die Anordnung (4) umfasst:
- ein Mittel (40) zum Auffangen von metallischem Material, insbesondere einen Magneten, insbesondere in Form eines zylindrischen Pellets,
- einen Ölabweiser (10), der den Raum (8) zwischen der Wand (6) des Gehäuses (5) und dem Zahnkranz (50) zumindest teilweise ausfüllt, wobei der Ölabweiser (10) einen unteren Teil (20) aufweist, bis zur Höhe der Verzahnung (51) des Zahnkranzes (50) zum Eintauchen in das Öl vorgesehen ist, und der untere Abschnitt (20) ein Aufnahmemittel (21) für das Auffangmittel (40) von metallischem Material (40) aufweist,
**dadurch gekennzeichnet, dass**:
das Aufnahmemittel (21) des Auffangmittels (40) gitterförmig (24) ist, so dass die Kontaktfläche zwischen dem Öl und dem Auffangmittel (40) maximiert wird.

2. Anordnung (4) nach einem der vorhergehenden Ansprüche, **dadurch gekennzeichnet, dass** zwischen dem Aufnahmemittel (21) und dem Auffangmittel (40) mindestens ein Spiel (J1; J2; J3) besteht, so dass dem im Aufnahmemittel (21) untergebrachten Auffangmittel (40) mindestens ein Freiheitsgrad verbleibt.

3. Anordnung (4) nach einem der vorhergehenden Ansprüche, **dadurch gekennzeichnet, dass** der untere Teil (20) des Ölabweisers (10) ein Mittel (22) zum Halten des Auffangmittels (40) innerhalb des Aufnahmemittels (21) umfasst, insbesondere eine flexible und elastische Lasche.

4. Anordnung (4) nach einem der vorhergehenden Ansprüche, **dadurch gekennzeichnet, dass** der Ölabweiser (10) ein Oberteil (30) zur Ausrichtung des Ölstrahls aufweist.

5. Anordnung (4) nach dem vorhergehenden Anspruch, **dadurch gekennzeichnet, dass** der Ölabweiser (10) eine im Wesentlichen gekrümmte Form aufweist, die sich zwischen dem unteren Teil (20) und dem oberen Teil (30) erstreckt, insbesondere eine allgemeine Form, die eine Krümmung mit einem Radius aufweist, der im Wesentlichen gleich dem Radius der Verzahnung (51) des Zahnkranzes (50) ist.

6. Anordnung (4) nach einem der vorhergehenden Ansprüche, **dadurch gekennzeichnet, dass** der Ölabweiser (10) aus Kunststoff und/oder Verbundwerkstoff hergestellt ist.

7. Getriebe (3), **dadurch gekennzeichnet, dass** es eine Anordnung (4) nach einem der vorhergehenden Ansprüche umfasst.

8. Antriebsstrang (2), insbesondere für Fahrzeuge, **dadurch gekennzeichnet, dass** er ein Getriebe (3) nach dem vorhergehenden Anspruch oder eine Anordnung (4) nach einem der Ansprüche 1 bis 6 umfasst.

9. Fahrzeug, insbesondere ein Kraftfahrzeug (1), **dadurch gekennzeichnet, dass** es einen Antriebsstrang (2) nach dem vorhergehenden Anspruch oder ein Getriebe (3) nach Anspruch 7 oder eine Anordnung (4) nach einem der Ansprüche 1 bis 6 umfasst.

## Claims

1. An assembly (4) comprising:
- a crankcase (5), in particular a crankcase (5) of a gearbox (3), comprising a wall (6),
- a ring gear (50) comprising a toothing (51), in particular a differential ring gear (50), partially immersed in oil,
- a space (8) provided between the wall (6) and the ring gear (50),
the assembly (4) comprising:
- means (40) for collecting metallic material, in particular a magnet, in particular in the form of a cylindrical pellet,
- - an oil deflector (10) at least partially filling the space (8) between the wall (6) of the crankcase (5) and the ring gear (50), the oil deflector (10) comprising a lower part (20) intended to be immersed in oil at the toothing (51) of the ring gear (50), the lower part (20) comprising a means (21) for receiving the means (40) for collecting metallic material, **characterised in that**:
the receiving means (21) of the collection means (40) is in the form of a grid (24) so as to maximise the area of contact between the oil and the collection means (40).

2. Assembly (4) according to one of the preceding claims, **characterised in that** at least one clearance (J1; J2; J3) exists between the receiving means (21) and the collection means (40) so as to leave at least one degree of freedom to the collection means (40) housed within the receiving means (21).

3. Assembly (4) according to one of the preceding claims, **characterised in that** the lower part (20) of the oil deflector (10) comprises a means (22) for holding the collection means (40) within the receiving means (21), in particular a flexible and elastic tongue.

4. Assembly (4) according to one of the preceding claims, **characterised in that** the oil deflector (10) comprises an upper part (30) for directing the oil spray.

5. Assembly (4) according to the preceding claim, **characterised in that** the oil deflector (10) has a generally curved shape extending between the lower part (20) and the upper part (30), in particular a general shape having a curvature of radius substantially equal to the radius of the toothing (51) of the ring gear (50).

6. Assembly (4) according to one of the preceding claims, **characterised in that** the oil deflector (10) is made of plastic and/or composite.

7. Gearbox (3), **characterised in that** it comprises an assembly (4) according to any of the preceding claims.

8. Powertrain (2), in particular for a vehicle, **characterised in that** it comprises a gearbox (3) according to the preceding claim, or an assembly (4) according to one of claims 1 to 6.

9. A vehicle, in particular a motor vehicle (1), **characterised in that** it comprises a powertrain (2) according to the preceding claim, or a gearbox (3) according to claim 7, or an assembly (4) according to one of claims 1 to 6.
